# EUROPEAN PATENT SPECIFICATION

(11) **EP 2 944 078 B1**
(45) Date of publication and mention of the grant of the patent: **17.08.2016**
(21) Application number: 14737354.2
(22) Date of filing: 28.05.2014
(51) Int. Cl.: H04N 5/232, H04N 5/225

(54) **WIRELESS VIDEO CAMERA**
DRAHTLOSE VIDEOKAMERA
CAMÉRA VIDÉO SANS FIL

(30) Priority: 18.07.2013 US 201313944919
(43) Date of publication of application: 18.11.2015
(73) Proprietor: Koss Corporation, Milwaukee, WI 53212-1052 (US)
(72) Inventor: BLAIR, Nick S., Milwaukee, WI 53212 (US); KOSS, Michael J., Milwaukee, WI 53212 (US); PELLAND, Michael J., Princeton, WI 54968 (US)
(74) Representative: Parry, Simon James
(86) International application number: PCT/US2014/039748
(87) International publication number: WO 2015/009357

(56) References cited:
- US-A1- 2012 282 974
- US-A1- 2013 155 182
- US-A1- 2013 155 268

## Description

### BACKGROUND

A wireless Internet video camera allows video (and sometimes audio) data to be captured and transmitted across a WiFi (IEEE 802.11 computer network. Wireless Internet video cameras work by serving up data streams to any computer (including, in some cases, a smartphone) that connects to them. Computers connect to the camera using either a standard Web browser or through a special client user interface. With proper security information, video streams from these cameras can also he viewed across the Internet from authorized computers. Some wireless Internet video cameras have pan, tilt and zoom features. That is, a remote user can control the pan, tilt and zoom, of the camera to thereby control the video captured by and streamed from the camera. For example, the remote user can zoom in on a subject in the field of view of the camera.

U.S. Pub. No. 2013/0155182 A1 discloses an apparatus to compensate for overshoot of a desired field of vision (FOV) by a remotely-controlled image capture device. The image capture device produces images associated with a plurality of FOVs, and transmits the images to a remote viewer terminal along with image identifiers. In response to viewer indications to pan or stop panning, the terminal sends pan and regress commands, respectively, to the image capture device. In response to receiving a regress command, the image capture device regresses to the selected FOV, and transmits additional images associated with the selected FOV to the terminal.

### SUMMARY

In one general aspect, the present invention is directed to a wireless video camera. One unique feature of the wireless video camera is that it permits bookmarking of objects in the surrounding environment of the camera When a remote user selects to see (via streaming video) a previously bookmarked object, the camera determines the appropriate camera viewing parameters (e.g., pan, tilt and zoom) to replicate the bookmarked view of the object. To account for an intervening change in position of the camera (from the time the bookmark was created and the time of the request to view the bookmarked view), the camera may compute any change in position of the camera, and adjust the camera viewing parameters for the bookmarked view to compensate for the camera's updated position so that the original bookmarked view of the object can be replicated.

Another feature of the camera is that, in a streaming video mode where the camera is streaming video to the remote user, the remote user can use a still image from the camera, as opposed to the streaming video, to control the remote camera. This may cut down on network delays associated with streaming video and provide the user with enhanced, more responsive, robust remote control.

These and other advantages of the present invention will be apparent from the description to follow.

### FIGURES

Various embodiments of the present invention are described herein by way of example in conjunction with the following figures, wherein:
Figure 1 illustrates a camera assembly according to various embodiments of the present invention, and shows other computer systems to which the camera assembly may be connected;
Figure 2 is a block diagram of the camera assembly according to various embodiments;
Figure 3 is a flow chart illustrating a process for configuring the camera assembly for wireless connectivity according to various embodiments of the present invention;
Figures 4A-4D illustrate a process for remotely controlling the camera assembly according to various embodiments of the present invention;
Figure 5 is a flow chart illustrating a process for remotely panning the camera assembly according to various embodiments of the present invention;
Figures 6A-6C illustrate a process for bookmarking a camera view of an object according to various embodiments of the present invention;
Figure 7 is a flow chart illustrating a process for replicating a bookmarked view of an object according to various embodiments of the present invention; and
Figures 8A-8D illustrate remote user controls for the camera assembly according to various embodiments of the present invention.

### DESCRIPTION

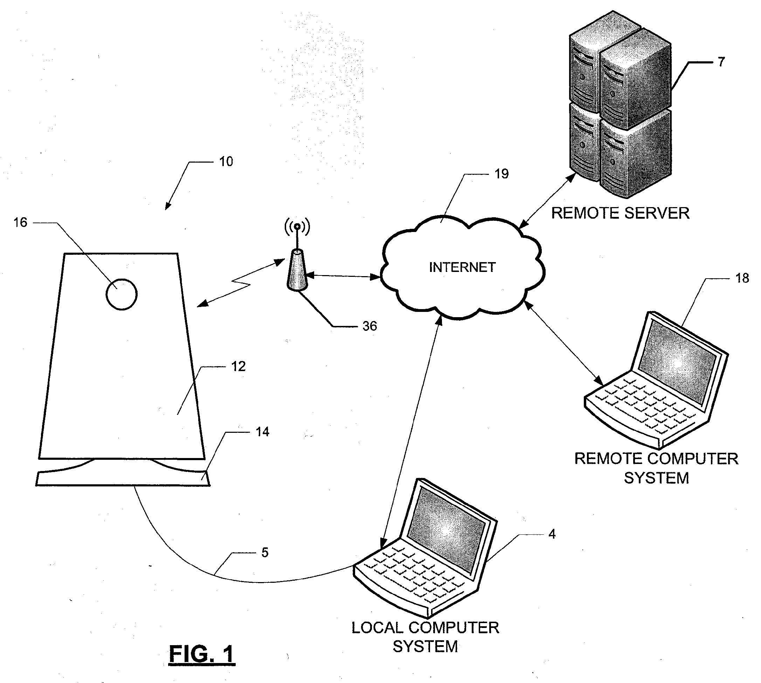

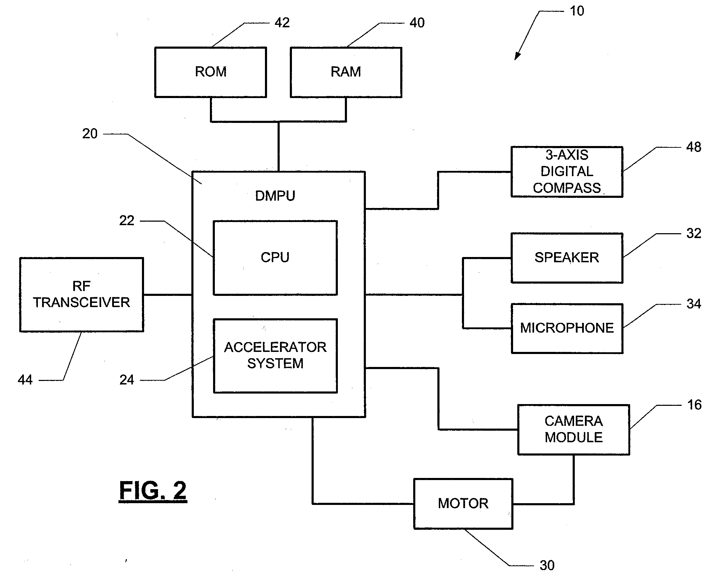

Figures 1 and 2 illustrate a wireless video camera assembly 10 according to various embodiments of the present invention. Figure 1 includes a front view of the camera assembly 10 and Figure 2 is a simplified block diagram of the camera assembly 10. As shown in Figures 1 and 2, the camera assembly 10 may comprise a shroud 12 (or other type of housing) and a base 14 on which the shroud 12 sits. The shroud 12 may house a digital camera module 16, which preferably comprises a multi-mega-pixel (e.g., 5-16 Megapixel) camera sensor with auto focus that is capable of capturing high quality, high-definition, digital video and still images. The camera sensor may have, for example, a seventy degree diagonal view angle. For example, the video may be 1080p at up to thirty (30) frames per second (based on user settings). In various embodiments, the digital camera module 16 may be implemented with e-CAM52-5640 camera module. The shroud 12 may be able to rotate 360 degrees about its vertical axis, e.g., around the base 14. The camera assembly 10 may also include a light indicator (e.g., one or more LEDs) (not shown) to indicate various states of the camera assembly 10; for example, one color may indicate on and another color may indicate powering down, etc. Also, the camera assembly 10 may include an on/off switch (not shown).

As shown in Figure 1, the camera assembly 10 may communicate wirelessly with one or more remote computer devices 18 via a digital data communication network 19. The remote computer devices 18 (of which only one is shown in Figure 1 for simplicity) may be any suitable processor-based computer device that is capable of communicating with the camera 10 through the network 19, and capable of rendering and playing images and videos from the camera assembly 10. For example, the remote computer device 18 may comprise a personal computer (PC), a laptop computer, a tablet computer, a smartphone, etc. The network 19 may be, for example, the Internet or any other suitable packet-switched or TCP network.

Also as shown in Figure 1, the camera assembly 10 may be connected, at some points in time although preferably not continuously, to a local computer device 4 through, for example, a USB connection 5. As such, the camera assembly 10 may include a USB port (not shown), such as a mini-USB port. The local computer device 4 may be used to configure the camera assembly 10, as explained further below. After configuration, the local computer device 4 could be disconnected from the camera assembly 10.

Figure 2 illustrates some of the electrical components of the camera assembly 10. As shown in Figure 2, the camera assembly 10 may comprise both a microprocessor unit (MPU) 22 and an image, video, audio accelerator system 24. The MPU 22 may control various functions and components of the camera assembly 10. The accelerator system 24 is a specialized adapter that performs graphical and audio processing to free up the MPU 22 to execute other commands. In various embodiments, both the MPU 22 and the accelerator system 24 may be part of a single digital media processing unit (DMPU) 20, as shown in Figure 2. The DMPU 20 may comprise various interfaces for communicating with the other components described below. The DMPU 20 may be, for example, a Texas Instruments DM37xx digital media processor. In other embodiments, the MPU 22 and accelerator system 24 may be implemented with discrete chips.

The digital camera module 16 is in communication with the DMPU 20. In addition, a motor 30 may rotate the shroud 12, and hence the camera module 16, to change the field of view of the camera module 16. In various embodiments, the motor 30 is a stepper motor that permits 360 degree, CW or CCW, rotation. Through rotation by the motor 30, the camera module 16 can pan (horizontally) through its surrounding environment. Tilt with the camera may be achieved through windowing of the digital images captured by the camera module 16. The camera assembly 10 may also comprise a loudspeaker 32 and a microphone 34, that are in communication with the DMPU 20.

The camera assembly 10 may also comprise memory, which may be embedded in the processor 20 and/or implemented with one or more external memory chips 40, 42. For example, in various embodiments, the processor 20 may comprise embedded RAM and ROM, and the external memory chips may comprise RAM 40 (e.g., 2Gb) and/or flash (ROM) memory 42 (e.g., 4Gb). The memory (either external or embedded) may store instructions (software and/or firmware) for execution by the processor 20. Also as shown in Figure 2, the camera assembly 10 may comprise a RF transceiver circuit 44 connected to the processor 20 that handles radio/wireless communications by the camera assembly 10. In various embodiments, the RF transceiver circuit 44 may be a separate chip from the processor 20 (as shown in Figure 2) or it could be integrated with the processor 20. The wireless communication may use any suitable wireless communication protocol, and preferably a protocol that is capable of communicating with the network 19 (e.g., the Internet) through an access point 36 (see Figure 1), such as the Wi-Fi protocols (such as IEEE 802.11 a, b, g, and/or n), or WiMAX (IEEE 802.16), or any other suitable protocol. In operator, therefore, images captured by the camera module 16 may be processed by the processor 20 and transmitted by the RF transceiver circuit 44 to a remote computer device(s) 18 via the data communications network 19. In an embodiment where the RF transceiver circuit 44 is a separate chip from the processor 20, the RF transceiver circuit 44 may be implemented with, for example, a NanoRadio NRG731 chip.

The camera assembly 10 may also include a digital 3-axis compass 48 that is in communication with the processor 20. The compass 48 may provide position and origination signals to the processor 20 so that the processor 20 can determine the position and orientation (pose) of the camera assembly 10.

In terms of power, the camera assembly 10 may run off of either battery power or a plugged-in power cord. The battery (not shown) may be a Li ion, rechargeable battery that charges when the camera assembly 10 is plugged in to an AC power socket (with a AC-DC converter) and which powers the camera assembly 10 when it is not plugged in (and powered on). In various embodiments, a user holds down the on/off switch to power on and off the camera assembly 10. Also, in various embodiments, the camera assembly 10 is automatically turned on when it receives power via the USB port.

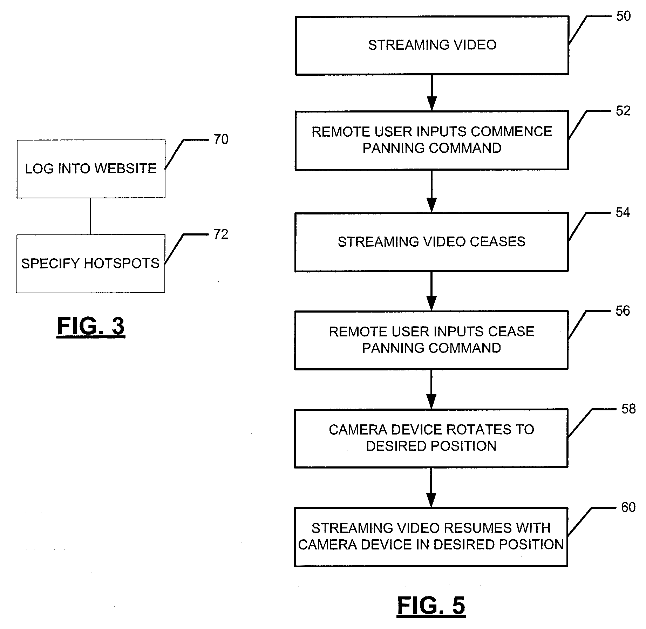

As mentioned above, a user of the camera assembly 10 may connect the camera assembly 10 to the local computer 4, as shown in Figure 1, in order to configure the camera assembly 10, including to set the Wi-Fi hotspots. Figure 3 is a flow chart of a process for setting up and customizing the camera assembly 10 according to various embodiments. At step 70, the user (e.g., a user of the camera assembly 10), using the Internet-enabled computer 4 with a browser, logs into a website hosted by a remote server(s) 7 (see Figure 1), and sets up an account (if the user does not already have one). At the website the user can, for example, add Wi-Fi hotspots, such as the Wi-Fi hotspot associated with the access point 36 in Figure 1. To add a Wi-Fi hotspot at step 72, the user may click (or otherwise activate) a link on the website that indicates a desire to add a Wi-Fi hotspot. In various embodiments, a JAVA applet from the website may be used by the computer 4 to search for nearby Wi-Fi hotspots, which, upon detection, may be displayed for the user on the website. The user may then click on (or otherwise select) the desired Wi-Fi hotspot to add. If applicable, the website may then prompt the user to enter a password and/or encryption type (e.g., WPA or WPA2) for the selected Wi-Fi hotspot. The SSID, password, and encryption type for the Wi-Fi hotspot is stored for the user's account by the remote server(s) 7. This process could be repeated as necessary to add as many Wi-Fi hotspots as desired by the user.

Once connected to the Internet 19, remote users (e.g., a user of remote computer device 18) can connect to the camera assembly 10 through the Internet 19 using, for example, the IP address for the camera assembly 10. In various embodiments, an appropriately authenticated remote user can download an applet, e.g., a JAVA applet, or other plug-in or browser extension, from the remote server 7 that, when running on the remote computer device 18, provides a user interface through which the remote user may remotely control of the camera assembly 10. The user interface may use, and obtain, the IP address for the camera assembly 10 from the remote server 7 (or some other remote server). Once connected to the camera assembly 10 through the network 19, the remote users can view, in real-time (but for processing delays), video streamed from the camera assembly 10. The stream may also include real-time audio picked up by the microphone 34.

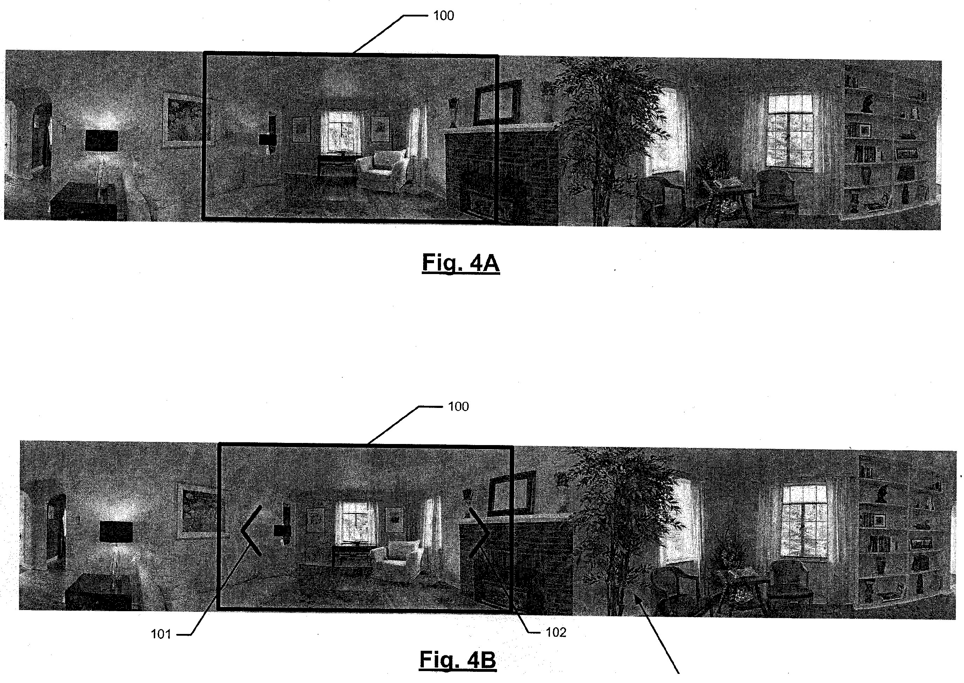

The control signals from the remote computer device 18 may be transmitted to the camera assembly 10 through the network 19 and processed by the processor 20 of the camera assembly 10 in order to control the operation of the camera assembly 10 (especially, the camera module 16 and motor 30). The remote user controls may include pan, zoom and tilt controls for camera module 16. For example, suppose the streaming video from the camera assembly 10 includes a scene of a room, such as shown in the example of Figure 4A. Suppose that in this example, the camera's field of view, and what is displayed on the user's remote computer device 18, is shown by the box 100. In various embodiments, the user may be able to remotely pan left with the camera assembly by clicking (such as with a cursor on a graphical display of the remote computer device 18) on the left-side of the image and similarly pan right by clicking on the right-side of the image. For example, as shown in the example of Figure 4B, the user could continuously click on, hover over, or otherwise active, the arrows 101, 102 to pan left or right, respectively. Other user input modalities may also be used to pan, such as left or right swipes on a touch screen, left and right arrows on a keyboard, left and right inputs on a touchpad or track ball, recognized voice commands (e.g., "pan left"), etc. The pan commands are transmitted to the camera assembly 10, and processed by the processor 20 to cause the stepper motor to rotate the camera module 10 left or right in accordance with the received commands.

The remote user may also input tilt and/or zoom commands. The user may tilt the camera up or down through similar user input modalities as for panning (e.g., cursor, touch screen taps, keyboard, touchpad, trackball, etc.). In various embodiments the camera assembly 10 does not physically tilt up or down in response to a tilt command, but rather the processor 20 computes graphical transformations of the captured images from the camera module 16 that approximate the commanded tilt (up or down) view. The user could zoom in on an object by indicating the location to be zoomed in on through any suitable user input modality (e.g., cursor clicks, touch screen taps, keyboard, touchpad, trackball, etc.). The amount of zooming may also be controlled in any suitable manner, such as activation of a plus sign input for greater zoom and a minus sign input for less zoom. The processor 20 may use digital zoom to zoom in on the desired object, such as by cropping an image from the camera module 16 down to a centered area with the same aspect ratio as the original, and usually also interpolating the result back up to the pixel dimensions of the original.

Other controls available to the remote user may include to take a picture, in which case a still image may be captured by the camera module 16, stored in memory, and transmitted to a specified destination (e.g., email address, text message address, etc.). Another remote control may be to record and store video. The video may be a 360 degree video of the surrounding environment for the camera 10 or some other path. The video may be stored in a memory of the camera 10. If not too large, the video file may be transmitted wirelessly to the remote computer 18, and in any case could be downloaded by the local computer 4 via the USB (or other suitable) connection. Also, the user could input voice or other audible inputs that may be picked up by the user's remote computer 18, transmitted to the camera assembly 10 via the network 19, and played via the loudspeaker 32. In that manner, the remote user could audibly, remotely communicate with persons near the camera assembly 10 (i.e., near enough to be within range of the loudspeaker 32 and the microphone 34), although a real-time conversation between a user of the remote computer 18 and a person in the vicinity of the camera 10 may be difficult given delays associated with recording and transmitting the audio, in both directions.

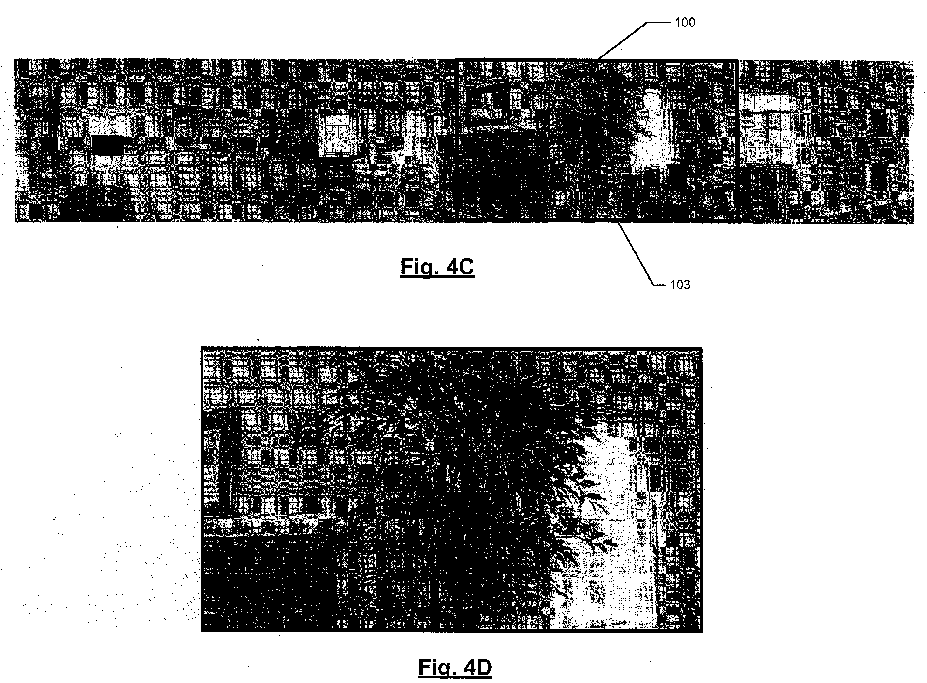

According to one embodiment, when the camera assembly 10 is streaming video to the remote computer 18 (e.g., in a streaming video mode), and the remote user wishes to rotate (i.e., horizontally pan) the scene, the user may use a still, buffered image from the camera assembly 10 in input the pan commands, rather than with streaming video, to reduce the network delay effects associated with streaming video. Figure 5 illustrates such a process according to various embodiments of the present invention. With reference to the flow chart of Figure 5, assume at step 50 that the camera assembly 10 is streaming video to the remote computer 18, and the video is of the room shown in Figure 4A. In this example the camera assembly 10 is not rotating, but the process works the same as when the camera assembly 10 is rotating. Assume that the remote user wants to home in on object in the scene (or even an object not in the field of view of the camera module at a particular time instant, but nevertheless an object that would be in the field of view of the camera 10 if it rotated); in this case, assume it is the lamp plant 103 shown in Figure 4B. In that case, the user remote user, at step 52, would input a command for the camera assembly 10 to start (or commence) rotating (horizontally panning) to the right. Such a command may be input by the remote user using any suitable input modality, such as described above. When the user inputs the command to pan to the right, at step 54 the camera 10 stops streaming video, in which case the remote user sees the last (still) image from the transmitted video, e.g. the image 100 in Figures 4A-4B. Using the last image, at step 56, the remote user pans until the remote user's desired position is reached. When the remote user inputs a stop (or cease) rotating (or panning) command at step 58, the camera assembly 10 rotates to the desired rotational position, in accordance with the panning command (e.g., pan from the start position to the stop position), and at step 60 the camera 10 resumes streaming video, now with the desired object in the field of view of the camera module 16, such as shown in Figure 4C. The remote user may also input a zoom command so that the streaming video is a close-up of the plant, as represented in Figure 4D. The user could also tilt (e.g., pan vertically), as described above.

In various embodiments, the camera assembly 10 may be rotating, following the remote user's commands to rotate, even though video is not being streamed from the camera assembly 10. That is, for example, as the remote user pans in one direction, say to the right, the camera assembly 10 rotates to the right as well, so that when the remote user completes panning, the camera assembly 10 is almost or already in the desired position and ready to resume streaming video. That way, the remote user does not need to wait, after inputting the cease panning command, for the camera assembly 10 to rotate from the initial position to the final position. Rather, the camera assembly 10 will be near the final position already so that the video stream can resume sooner. In that manner, the remote user may pan to an object that is out of the original field of view of the camera assembly 10. For example, the plant 103 is not in the original field of view 100 of the camera in Figure 4A. As the user pans to the right, the camera assembly 10 follows along, and may capture and transmit a new still image when the edge of the original field of view (e.g., the right-hand edge in this example) is reached. The remote user then can continue to pan in the new image. This process can be repeated until the remote user reaches the desired position, at which point streaming video can resume.

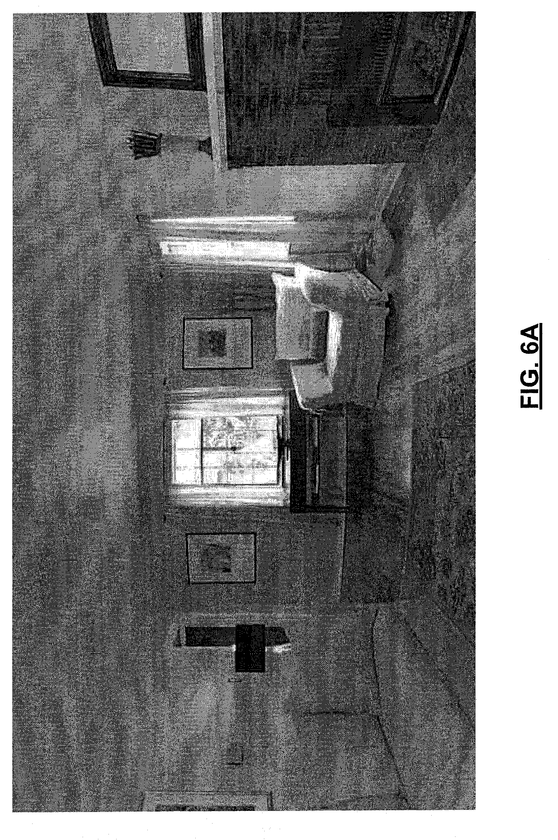

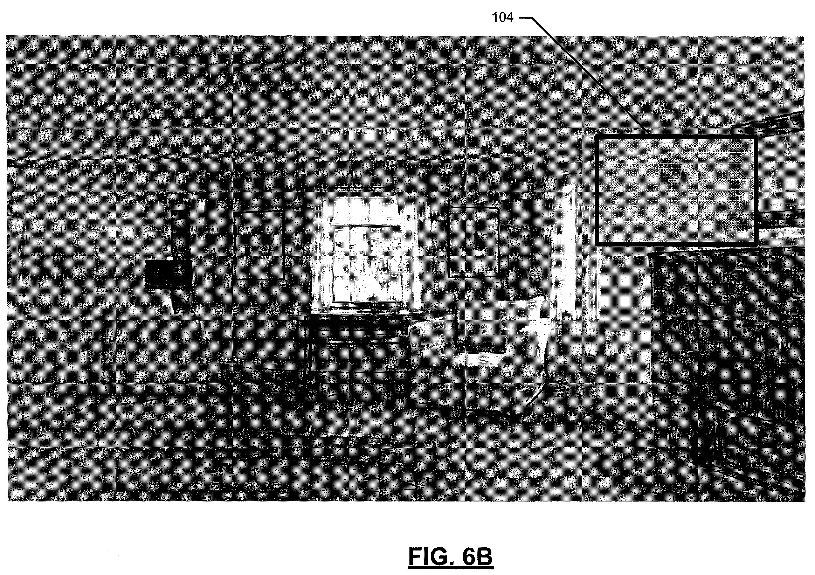

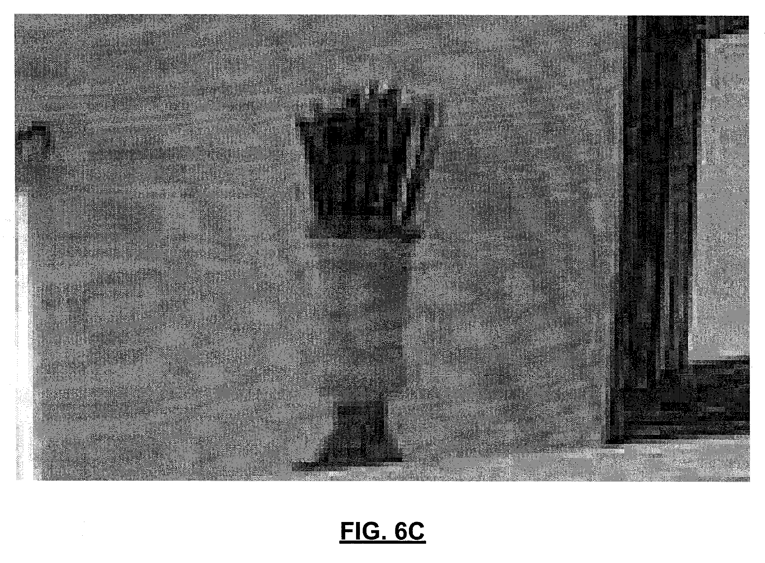

Additionally, in various embodiments, the camera assembly 10 permits the remote user to "bookmark" an object in the surrounding environment of the camera assembly 10, and when the user selects the bookmarked site/object, the camera assembly 10 automatically pans, tilts, and zooms as necessary to replicate the bookmarked view of the object. For example, suppose the camera assembly 10 is streaming the view in Figure 6A. The remote user could bookmark an object or scene in the view by putting a rectangle 104 or other shape around the desired object and sizing the rectangle as desired, as shown in Figure 6B. In this example, the user bookmarked the vase on the fireplace mantle. In various embodiments, the rectangle 100 may maintain a constant aspect ratio, such as 16:9. In various embodiments, the user interface may allow the user to drag a bookmark to the desired object or otherwise indicate where it should be and its desired size. The user then saves the bookmark and may give it a name for easy recall, such as "vase" in this example. The camera viewing parameters for the bookmarked object, e.g., the pan, tilt and zoom parameters, may be stored either by the remote computer 18 or by the camera assembly 10. Subsequently, the user can select a bookmark, from a bookmark example, and the camera assembly 10 will automatically pan, tilt and zoom as necessary, to replicate the bookmarked view of the object. In this example, the camera zooms in on the vase as shown in Figure 6C. In an embodiment where the remote computer 18 stores the camera viewing parameters, the remote computer 18 transmits the parameters to the camera assembly 10, which are stored in memory as part of the processor's operation to control the camera module 16 (and the motor 30) so that the bookmarked view is replicated. In an embodiment where the camera assembly 10 stores the parameters, the remote computer 18 transmits an identifier for the selected bookmark, the processor 20 looks up in memory the camera viewing parameters corresponding to the bookmark, and controls the camera module 16 and motor 30 accordingly.

The camera assembly 10 may be relatively small and easy to move from place to place. For example, a user may remove the camera assembly 10 from its normal or original position, such as to charge it, and then replace it back, but not always in the identical, prior position. Accordingly, the processor 20 (based on software stored in the memory) may use inputs from the digital compass 48 to determine if it has been moved and, if so, how much and where. When going to a bookmarked view, the processor 20 may adjust the camera viewing parameters to replicate the bookmarked view if the camera assembly 10 was moved. For example, if the bookmark was set while the camera assembly was in Position A, and then it is subsequently moved to Position B and the bookmark is selected, the processor 20 adjusts the camera viewing parameters (e.g., pan, tilt and zoom) as necessary for the position change from Position A to Position B to replicate the bookmarked view from Position B. In various embodiments, the digital compass 48 may have a 3D digital linear acceleration sensor and a 3D magnetometer module, such as the STMicro LSM303DLHC digital compass.

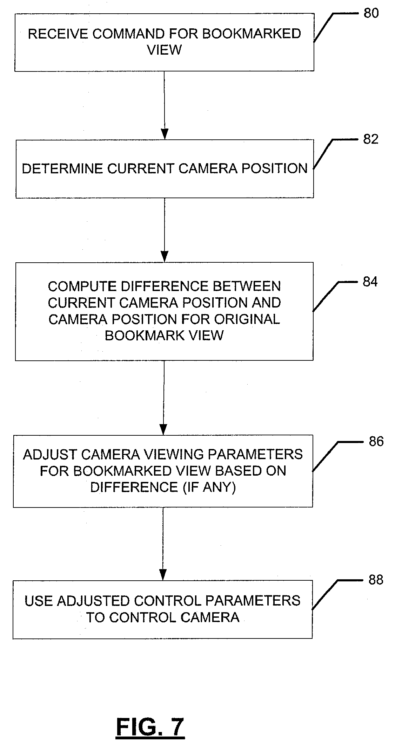

Figure 7 is a diagram of a flowchart that the processor 20 of the camera assembly 10, executing software stored in memory 40, 42, might perform to show a bookmarked view. At step 80, the camera assembly 10 receives from the remote user show a previously bookmarked view. At step 82, using the data signals from the digital compass 48, the processor 20 determines the current position and orientation of the camera assembly 10. Then, a step 84, the camera assembly 10 compares the current camera position to the position and orientation of the camera assembly 10 when the bookmarked view was originally configured to see if the camera assembly 10 has been moved or otherwise relocated since the bookmarked view was originally configured. The difference, if any, in the positions is computed at step 84. Next, at step 86, the processor 20 adjusts the camera viewing parameters (e.g., pan, tilt and zoom) for the bookmarked view to compensate for the current camera position. As such, the processor 20 reads out the original camera viewing parameters for the bookmarked view, for the original camera position for the bookmarked view, and adjusts the parameters based on the difference between the current camera position and the original camera position. Of course, if the camera has not moved, there is no adjustment to the parameters. Then, at step 88, the processor 20 uses the adjusted camera viewing parameters to replicate the bookmarked view. For example, it commands to the motor 30 to rotate/pan the camera module 16 to the desired position, graphical transforms the images to obtain the desired tilt, and auto focuses to obtain the desired zoom.

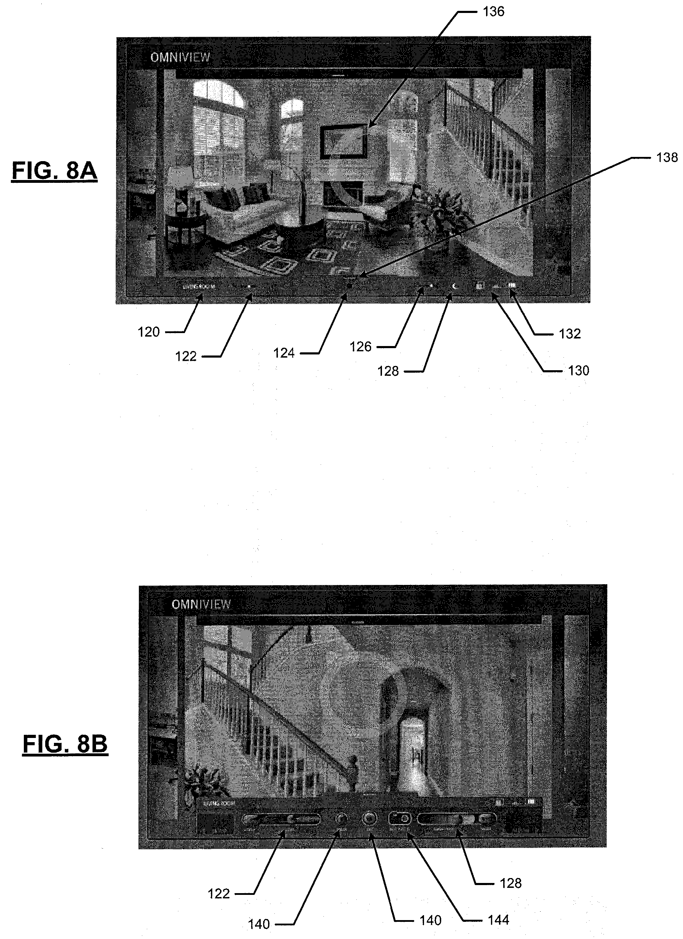

Figures 8A-8D show sample user interface controls for the camera assembly. As shown in Figure 8A, the user can provide a description name for the camera; here, "Living Room" 120. The user may also control the playback volume at volume control 122. The red light 124 may indicate that the video is live streaming. The remote user may also control the microphone 34 volume through microphone volume control 126, and adjust the brightness through brightness control 128. The strength of the wireless network may also be displayed 130, and may remaining battery power 132 for the camera assembly 10. In this example, the remote user may control the pan and tilt of the camera assembly 10 through the circle 136 in the image. The user could click on a location of the circle 136 to pan/tilt in that direction. Also, the remote user could specify a zoom command by double-clicking on the center of the circle 136.

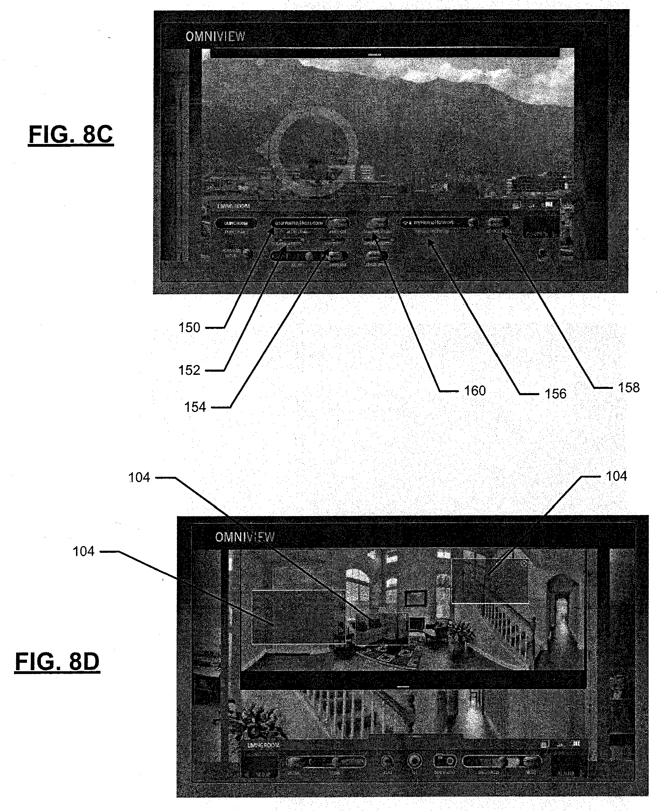

In addition, in various embodiments, the user may reveal more detailed command controls by expanding the control panel through control 138. An example of a more-detailed control panel is shown in Figure 8B. This example shows a more detailed volume control, a button 140 for speaking (through the microphone 34), a button 142 to initiating live steaming, a button 144 for taking a photo (e.g., a still image), and more detailed brightness control 128. Figure 8C illustrates an advanced control panel. Here, the user can specify an email address (or MMS address) 150 to which alerts email (or text message) alerts are to be sent. The user may also specify the duration of any such video alert a control 152, and specify the sensitivity of the motion in the video that would trigger an alert at control 154. The control panel may also indicate the infrastructure wireless network being used at 156, and may also allow the user to use an ad hoc wireless mode at control 158, which is explained further below. The user may also indicate the panoramic views of the scene should be taken and saved every so often (i.e., with a certain frequency) with controls 160. Figure 8D shows a user interface where several bookmarks 104 have been specified. As mentioned above, the remote user may obtain a bookmarked view of the bookmarked item by clicking on (or otherwise activating) the bookmark.

As mentioned above, the camera assembly 10 may communicate with the remote computer device 18 through an infrastructure wireless network 19 with an access point 36 (see Figure 1). In contrast to this infrastructure mode, the camera assembly 10 may also communicate in a ad hoc wireless mode with the remote computer device 18 (i.e., a mode that does not rely on a preexisting infrastructure, such as routers in wired networks or access points in managed (infrastructure) wireless networks). U.S. patent application Serial No. 13/832,719, entitled "Configuring Wireless Devices for a Wireless Infrastructure Network", filed March 15, 2013, and U.S. Patent No. 8,190,203, provide more details about such ad hoc wireless networks.

In various embodiments, therefore, the present invention is directed generally to wireless video camera system. The system may comprise the remote computer system 18 and the camera assembly 10, the two being in wireless communication with each other via a TCP network such that the camera assembly is controllable by the remote computer system. The camera assembly may comprise: a processor 20; a camera module 16 that is for capturing video and images of a surrounding environment; a wireless communication circuit 44 for communicating with the remote computer system via the TCP network; a motor 30 for moving the camera module; a digital compass; and a memory unit 40, 42 in communication with the processor. The memory unit stores instructions that programs the processor to: (i) when the camera assembly is in a streaming video mode, transmit streaming video to the remote computer system; (ii) upon receipt of an initiate panning input command from the remote computer system, receive one or more camera viewing parameters, including at least a pan parameter, from the remote computer system relative to a buffered image from the streaming video, wherein the one or more camera viewing; (iii) control the motor to rotate the camera module in accordance with the received pan parameter; and (iv) upon receiving a cease panning input command, commence streaming video from the camera module based on the one or more camera view parameters received from the remote computer system.

In various implementations, the one or more camera viewing parameters further comprise a tilt parameter and a zoom parameter. Also, the wireless communication circuit may comprise a Wi-Fi communication circuit.

In another embodiment, alternative or additionally, the memory unit may store instructions that cause the processor to, upon the camera assembly receiving from the remote computer system a command to show video of a previously bookmarked object in the surrounding environment, determine adjusted camera viewing parameters for the camera module based on (i) stored camera viewing parameters for the bookmarked object and (ii) a current position of the camera assembly. The current position of the camera assembly may be determined based on input from the digital compass. In addition, the processor may control the camera module based on the adjusted camera viewing parameters to stream video of the bookmarked object to the remote computer system via the TCP network.

In various implementations, the stored camera viewing parameters for the bookmarked object are associated with an original position of the camera assembly, and the adjusted camera viewing parameters are determined based on a difference between the current position of the camera assembly and the original position of the camera assembly. Also, the streamed video of the bookmarked object may have the same aspect ratio (e.g., 16:9) as non-bookmarked, streamed video from the camera assembly. In addition, the processor may be programmed to control the camera module based on the adjusted camera viewing parameters by controlling the motor to rotate the camera module in accordance with an adjusted pan parameter.

A method for streaming video in accordance with the present invention may include the step of transmitting wirelessly, from a camera assembly 10, streaming video to the remote computer system 18 that is in communication with the remote computer system via a TCP network. The method may further comprise the steps of, upon receipt of an initiate panning input command from the remote computer system, receiving, by the camera assembly, one or more camera viewing parameters from the remote computer system relative to a buffered image from the streaming video, including at least a pan parameter, and controlling by the camera assembly the motor 30 of the camera assembly to rotate the camera module in accordance with the received pan parameter. The method may further comprise upon receiving, by the camera assembly, a cease panning input command from the remote computer system, commencing streaming video from the camera module based on the one or more camera viewing parameters received from the remote computer system.

In another variation, a method for streaming video in accordance with the present invention may comprise the step of receiving, by the camera assembly 10, from the remote computer system 18, a command to show video of a previously bookmarked object in a surrounding environment of the camera assembly. The method may further comprise the step of determining, by the camera assembly, a current position of the camera assembly based on input from the digital compass. The method may further comprise the step of determining, by the camera assembly, adjusted camera viewing parameters for the camera module based on (i) stored camera viewing parameters for the bookmarked object and (ii) the current position of the camera assembly. The method may further comprise the step of controlling the camera module based on the adjusted camera viewing parameters to stream video of the bookmarked object to the remote computer system via the TCP network. Controlling the camera module based on the adjusted camera viewing parameters may comprise rotating, by the motor, the camera module in accordance with the adjusted pan parameter.

In various embodiments disclosed herein, a single component may be replaced by multiple components and multiple components may be replaced by a single component to perform a given function or functions. Except where such substitution would not be operative, such substitution is within the intended scope of the embodiments. Any servers described herein, for example, may be replaced by a "server farm" or other grouping of networked servers (such as server blades) that are located and configured for cooperative functions. It can be appreciated that a server farm may serve to distribute workload between/among individual components of the farm and may expedite computing processes by harnessing the collective and cooperative power of multiple servers. Such server farms may employ load-balancing software that accomplishes tasks such as, for example, tracking demand for processing power from different machines, prioritizing and scheduling tasks based on network demand and/or providing backup contingency in the event of component failure or reduction in operability.

While various embodiments have been described herein, it should be apparent that various modifications, alterations, and adaptations to those embodiments may occur to persons skilled in the art with attainment of at least some of the advantages. The disclosed embodiments are therefore intended to include all such modifications, alterations, and adaptations without departing from the scope of the embodiments as set forth herein.

## Claims

1. A wireless video camera system comprising:
a remote computer system; and
a camera assembly that is in wireless communication with the remote computer system via a TCP network such that the camera assembly is controllable by the remote computer system, wherein the camera assembly comprises:
a processor;
a camera module in communication with the processor, wherein the camera module is for capturing video and images of a surrounding environment;
a wireless communication circuit in communication with the processor and for communicating with the remote computer system via the TCP network, wherein the wireless communication circuit is for transmitting video and images captured by the camera module to the remote computer system via the TCP network;
a motor for moving the camera module;
a memory unit in communication with the processor, wherein the memory unit stores instructions that programs the processor to:
when the camera assembly is in a streaming video mode, transmit streaming video to the remote computer system, wherein the streaming video comprises a stream of images captured by the camera assembly, and wherein the camera module has a first rotational position when capturing the images in the stream of images;
upon receipt of an initiate panning input command from the remote computer system, cease streaming video to the remote computer system;
after receipt of the initiate panning input command, receive a cease panning command from the remote computer system, wherein the cease panning command is relative to a buffered image in the stream of images from the streaming video, wherein the cease panning command corresponds to a second rotational position for the camera module;
control the motor to rotate the camera module from the fist rotational position to the second rotational position; and
after rotating the camera module from the first rotational position to the second rotational position, commence streaming video from the camera module to the remote computer system.

2. The camera system of claim 1, wherein the processor is further programmed to:
after receiving the initiate panning command, receive a second camera viewing parameter command from the remote computer system, wherein the second camera command comprises at least one of a tilt parameter and a zoom parameter; and
control the camera module in accordance with the second camera viewing parameter command.

3. The camera system of claim 1, wherein the wireless communication circuit comprises a Wi-Fi communication circuit.

4. The camera system of claim 2, wherein:
the wireless communication circuit comprises a Wi-Fi communication circuit; and
the processor comprises a digital media processing unit.

5. A method for streaming video comprising:
transmitting wirelessly, from a camera assembly, streaming video to a remote computer system, wherein the streaming video comprises a stream of images captured by the camera assembly while in a first rotational position, wherein the camera assembly is in communication with the remote computer system via a TCP network, and wherein the camera assembly comprises:
a processor;
a camera module in communication with the processor, wherein the camera module is for capturing video and images of a surrounding environment,
a wireless communication circuit in communication with the processor and for communicating with the remote computer system via the TCP network, wherein the wireless communication circuit is for transmitting video and images captured by the camera module to the remote computer system via the TCP network;
a motor for moving the camera, module;
upon receipt of an initiate planning input command from the remote computer system, ceasing, by the camera assembly, streaming video to the remote computer system;
after receipt of the initiate panning input command, receiving, by the camera assembly, a cease panning command from the remote computer system, wherein the cease panning command is relative to a buffered image in the stream of images from the streaming video, wherein the cease panning command corresponds to a second rotational position for the camera assembly;
controlling by the camera assembly the motor of the camera assembly to rotate the camera module from the first rotational position to the second rotational position; and
after rotating the camera module form the first rotational position to the second rotational position, commencing streaming video from the camera module to the remote computer system.

6. The method of streaming video of claim 5, further comprising:
after receiving the initiate panning command, receiving a second camera viewing parameter command from the remote computer system, wherein the second camera command comprises at least one of a tilt parameter and a zoom parameter; and
controlling the camera module in accordance with the second camera viewing parameter command.

7. The method of streaming video of claim 5, wherein the wireless communication circuit comprises a Wi-Fi communication circuit.

8. The method of streaming video of claim 6, wherein:
the wireless communication circuit comprises a Wi-Fi communication circuit; and the processor comprises a digital media processing unit.

## Patentansprüche

1. Drahtloses Videokamerasystem, das Folgendes umfasst:
ein Ferncomputersystem; und
eine Kameraanordnung, die über ein TCP-Netzwerk in drahtloser Kommunikation mit dem Ferncomputersystem steht, so dass die Kameraanordnung durch das Ferncomputersystem steuerbar ist, worin die Kameraanordnung Folgendes umfasst:
einen Prozessor;
ein Kameramodul in Kommunikation mit dem Prozessor, worin das Kameramodul zum Aufnehmen von Videos und Bildern einer Umgebung dient;
eine Drahtloskommunikationsschaltung in Kommunikation mit dem Prozessor und zum Kommunizieren mit dem Ferncomputersystem über das TCP-Netzwerk, worin die Drahtloskommunikationsschaltung zum Übertragen von Videos und Bildern, die von dem Kameramodul aufgenommen wurden, über das TCP-Netzwerk an das Ferncomputersystem dient;
einen Motor zum Bewegen des Kameramoduls;
eine Speichereinheit in Kommunikation mit dem Prozessor, worin die Speichereinheit Befehle speichert, die den Prozessor folgendermaßen programmieren:
Video-Streaming an das Ferncomputersystem zu übertragen, wenn sich die Kameraanordnung in einem Videostream-Modus befindet, worin das Videostreaming eine Folge von Bildern umfasst, die von der Kameraanordnung aufgenommen wurden und worin das Kameramodul eine erste Rotationsposition aufweist, wenn sie die Bilder in der Bilderfolge aufnimmt;
Anhalten des Videostreamings an das Ferncomputersystem wenn ein Start-Schwenkeingabebefehl von dem Ferncomputersystem empfangen wird;
Empfangen eines Stopp-Schwenkbefehls von dem Ferncomputersystem nach dem Empfangen des Start-Schwenkbefehls, worin der Stopp-Schwenkbefehl relativ zu einem gepufferten Bild in der Bilderfolge aus dem Videostream ist, worin der Stopp-Schwenkbefehl einer zweiten Rotationsposition für das Kameramodul entspricht;
Steuern des Motors, um das Kameramodul von der ersten Rotationsposition in die zweite Rotationsposition zu drehen; und
Beginnen des Videostreamings von dem Kameramodul an das Ferncomputersystem nach dem Drehen des Kameramoduls von der ersten Rotationsposition in die zweite Rotationsposition.

2. Kamerasystem nach Anspruch 1, worin der Prozessor ferner für Folgendes programmiert ist:
Empfangen eines zweiten Kameraansichtsparameterbefehls von dem Ferncomputersystem nach dem Empfang des Start-Schwenkbefehls, worin der zweite Kamerabefehl zumindest einen aus einem Kippparameter und einem Zoom-Parameter umfasst; und
Steuern des Kameramoduls in Übereinstimmung mit dem zweiten Kameraansichtsparameterbefehl.

3. Kamerasystem nach Anspruch 1, worin die Drahtloskommunikationsschaltung eine WLAN-Kommunikationsschaltung umfasst.

4. Kamerasystem nach Anspruch 2, worin:
die Drahtloskommunikationsschaltung eine WLAN-Kommunikationsschaltung umfasst; und
der Prozessor eine digitale Medienverarbeitungseinheit umfasst.

5. Verfahren zum Streamen von Videos, das Folgendes umfasst:
drahtloses Übertragen eines Videostreamings von einer Kameraanordnung an ein Ferncomputersystem,
worin das Videostreaming eine Folge von Bildern umfasst, die von einer Kameraanordnung aufgenommen wurden, während diese sich in der ersten Rotationsposition befindet, worin die Kameraanordnung über ein TCP-Netzwerk in Kommunikation mit dem Ferncomputersystem steht, und worin die Kameraanordnung Folgendes umfasst:
einen Prozessor;
ein Kameramodul in Kommunikation mit dem Prozessor, worin das Kameramodul zum Aufnehmen von Videos und Bildern einer Umgebung dient;
eine Drahtloskommunikationsschaltung in Kommunikation mit dem Prozessor und zum Kommunizieren mit dem Ferncomputersystem über das TCP-Netzwerk, worin die Drahtloskommunikationsschaltung zum Übermitteln von Videos und Bildern, die von dem Kameramodul aufgenommen wurden, an das Ferncomputersystem über das TCP-Netzwerk dient;
einen Motor zum Bewegen des Kameramoduls;
Anhalten des Videostreamings durch die Kameraanordnung an das Ferncomputersystem bei Empfang eines Start-Schwenkeingabebefehls von dem Ferncomputersystem;
Empfangen eines Stopp-Schwenkbefehls von dem Ferncomputersystem durch die Kameraanordnung nach Empfang des Start-Schwenkeingabebefehls, worin der Stopp-Schwenkbefehl relativ zu einem gepufferten Bild in der Bilderfolge aus dem Videostreaming ist, worin der Stopp-Schwenkbefehl einer zweiten Rotationsposition für die Kameraanordnung entspricht;
Steuern des Motors der Kameraanordnung durch die Kameraanordnung, um das Kameramodul von der ersten Rotationsposition in die zweite Rotationsposition zu drehen; und
Beginnen des Videostreamings von dem Kameramodul an das Ferncomputersystem nach Drehen des Kameramoduls von der ersten Rotationsposition in die zweite Rotationsposition.

6. Verfahren zum Streamen von Videos nach Anspruch 5, das ferner Folgendes umfasst:
Empfangen eines zweiten Kameraansichtsparameterbefehls von dem Ferncomputersystem nach Empfang des Start-Schwenkbefehls, worin der zweite Kamerabefehl zumindest einen aus einem Kippparameter und einem Zoom-Parameter umfasst; und
Steuern des Kameramoduls in Übereinstimmung mit dem zweiten Kameraansichtsparameterbefehl.

7. Verfahren zum Streamen von Videos nach Anspruch 5, worin die Drahtloskommunikationsschaltung eine WLAN-Kommunikationsschaltung umfasst.

8. Verfahren zum Streamen von Videos nach Anspruch 6, worin:
die Drahtloskommunikationsschaltung eine WLAN-Kommunikationsschaltung umfasst; und der Prozessor eine digitale Medienverarbeitungsschaltung umfasst.

## Revendications

1. Système de caméra vidéo sans fil comprenant :
un système informatique distant ; et
un assemblage de caméra qui est en communication sans fil avec le système informatique distant, par l'intermédiaire d'un réseau TCP, de sorte que l'assemblage de caméra peut être commandé par le système informatique distant, dans lequel l'assemblage de caméra comprend :
un processeur ;
un module de caméra en communication avec le processeur, dans lequel le module de caméra est destiné à capturer des images et de la vidéo d'un environnement proche ;
un circuit de communication sans fil en communication avec le processeur et destiné à communiquer avec le système informatique distant par l'intermédiaire du réseau TCP, dans lequel le circuit de communication sans fil est destiné à transmettre de la vidéo et des images capturées par le module de caméra au système informatique distant par l'intermédiaire du réseau TCP ;
un moteur destiné à déplacer le module de caméra ;
une unité de mémoire en communication avec le processeur, dans lequel l'unité de mémoire stocke des instructions qui programment le processeur de manière à :
lorsque l'assemblage de caméra est dans un mode de diffusion vidéo en continu, transmettre une diffusion vidéo en continu au système informatique distant, dans lequel la diffusion vidéo en continu comprend un flux d'images capturées par l'assemblage de caméra, et dans lequel le module de caméra présente une première position angulaire lors de la capture des images dans le flux d'images ;
lors de la réception d'une commande d'initiation d'entrée de panoramique en provenance du système informatique distant, interrompre la diffusion vidéo en continu au système informatique distant ;
suite à la réception de la commande d'initiation d'entrée de panoramique, recevoir une commande d'interruption de panoramique en provenance du système informatique distant, dans lequel la commande d'interruption de panoramique est connexe à une image mise en mémoire tampon dans le flux d'images à partir de la diffusion vidéo en continu, dans lequel la commande d'interruption de panoramique correspond à une seconde position angulaire pour le module de caméra ;
commander au moteur de faire tourner le module de caméra de la première position angulaire vers la seconde position angulaire ; et
suite à la rotation du module de caméra de la première position angulaire vers la seconde position angulaire, commencer la diffusion vidéo en continu du module de caméra au système informatique distant.

2. Système de caméra selon la revendication 1, dans lequel le processeur est en outre programmé de manière à :
suite à la réception de la commande d'initiation de panoramique, recevoir une seconde commande de paramètre de visualisation de caméra en provenance du système informatique distant, dans lequel la seconde commande de caméra comprend au moins l'un parmi un paramètre d'inclinaison et un paramètre de zoom ; et
commander le module de caméra selon la seconde commande de paramètre de visualisation de caméra.

3. Système de caméra selon la revendication 1, dans lequel le circuit de communication sans fil comporte un circuit de communication Wi-Fi.

4. Système de caméra selon la revendication 2, dans lequel :
le circuit de communication sans fil comporte un circuit de communication Wi-Fi ; et
le processeur comporte une unité de traitement multimédia numérique.

5. Procédé de diffusion vidéo en continu comprenant les étapes ci-dessous consistant à :
transmettre par voie hertzienne, à partir d'un assemblage de caméra, une diffusion vidéo en continu à un système informatique distant, dans lequel la diffusion vidéo en continu comprend un flux d'images capturées par l'assemblage de caméra dans une première position angulaire, dans lequel l'assemblage de caméra est en communication avec le système informatique distant par l'intermédiaire d'un réseau TCP, et dans lequel l'assemblage de caméra comprend :
un processeur ;
un module de caméra en communication avec le processeur, dans lequel le module de caméra est destiné à capturer des images et de la vidéo d'un environnement proche ;
un circuit de communication sans fil en communication avec le processeur et destiné à communiquer avec le système informatique distant par l'intermédiaire du réseau TCP, dans lequel le circuit de communication sans fil est destiné à transmettre de la vidéo et des images capturées par le module de caméra au système informatique distant par l'intermédiaire du réseau TCP ;
un moteur destiné à déplacer le module de caméra ;
lors de la réception d'une commande d'initiation d'entrée de panoramique en provenance du système informatique distant, interrompre, par le biais de l'assemblage de caméra, la diffusion vidéo en continu au système informatique distant ;
suite à la réception de la commande d'initiation d'entrée de panoramique, recevoir, par le biais de l'assemblage de caméra, une commande d'interruption de panoramique en provenance du système informatique distant, dans lequel la commande d'interruption de panoramique est connexe à une image mise en mémoire tampon dans le flux d'images à partir de la diffusion vidéo en continu, dans lequel la commande d'interruption de panoramique correspond à une seconde position angulaire pour l'assemblage de caméra ;
commander, par le biais de l'assemblage de caméra, au moteur de l'assemblage de caméra de faire tourner le module de caméra de la première position angulaire vers la seconde position angulaire ; et
suite à la rotation du module de caméra de la première position angulaire vers la seconde position angulaire, commencer la diffusion vidéo en continu du module de caméra au système informatique distant.

6. Procédé de diffusion vidéo en continu selon la revendication 5, comprenant en outre les étapes ci-dessous consistant à :
suite à la réception de la commande d'initiation de panoramique, recevoir une seconde commande de paramètre de visualisation de caméra en provenance du système informatique distant, dans lequel la seconde commande de caméra comprend au moins l'un parmi un paramètre d'inclinaison et un paramètre de zoom ; et
commander le module de caméra selon la seconde commande de paramètre de visualisation de caméra.

7. Procédé de diffusion vidéo en continu selon la revendication 5, dans lequel le circuit de communication sans fil comporte un circuit de communication Wi-Fi.

8. Procédé de diffusion vidéo en continu selon la revendication 6, dans lequel :
le circuit de communication sans fil comporte un circuit de communication Wi-Fi ; et le processeur comporte une unité de traitement multimédia numérique.
